# EUROPEAN PATENT SPECIFICATION

(11) **EP 3 544 894 B1**
(45) Date of publication and mention of the grant of the patent: **05.05.2021**
(21) Application number: 17807907.5
(22) Date of filing: 23.11.2017
(51) Int. Cl.: B64D 11/06, B60N 3/00

(54) **SEATS**
SITZE
SIÈGES

(30) Priority: 23.11.2016 GB 201619824
(43) Date of publication of application: 02.10.2019
(73) Proprietor: Pitch Aircraft Seating Systems Limited, Birmingham B15 1TS (GB)
(72) Inventor: DOY, Gary, Birmingham, West Midlands B15 1TS (GB)
(74) Representative: HGF
(86) International application number: PCT/GB2017/053528
(87) International publication number: WO 2018/096340

(56) References cited:
- DE-A1-102011 011 657
- US-A- 2 805 904
- US-A1- 2007 200 414
- US-B1- 6 592 179

## Description

This invention relates to seats and specifically, although not exclusively, to seats usable in modes of mass transport, for example aircraft, trains, trams, coaches, boats and so on and particularly in aircraft.

It is known that seats for aircraft and other modes of mass transport are provided as a seat set, wherein plural seats are mounted in common for installation in the vehicular body concerned. The mounting of the seat set is important within an aircraft due to the dynamic loads experienced and issues of user-comfort.

The usability of an aircraft seat is governed by a strict regulatory framework. In particular the seat must pass a number of dynamic tests including 16g forward tests, a 9g downwards test and the HIC (Head Impact Criteria) test, which mean that the seat as a whole (that is the seat and all its fittings) must pass tests for structural integrity and that the seat as a whole must meet tests for passenger safety.

Other criteria require that:
- The fore and aft aisles must be at least 15" (38.1 cm) wide from ground level up to a height 25" (63.5 cm) from the floor and from 25" (63.5 cm) from the floor and above, the aisle must be at least 20" (50.8 cm) wide. Most designers will incorporate a design tolerance of 0.5" (12.7 cm) to these requirements;
- For taxi, take-off and landing ("TTOL"), the crew must have a view of all the passengers when seated. This does not necessarily have to be by direct line of sight but can be by the use of video cameras, or mirrors;
- The seat positions must be aligned with the positions of the oxygen masks;
- There must be sufficient space for the circulation of air in case of decompression, and space left for decompression ducts;
- The height of the seat shell must not exceed 48"; and
- The selection and location of materials within the aircraft are very restricted, because they must be fire resistant and easy to clean.

As will be appreciated, the available space on board an aircraft is at a premium, not least because the more passengers that can be safely accommodated the more income that a carrier can extract for each journey. That said, the regulatory framework imposes certain restrictions as to the pitch between successive rows of aircraft seats to ensure ease of access when taking or leaving the seat and efficient egress in the event of an accident or other reason for evacuation. Accordingly, the effective use of the pitch between successive rows whilst providing appropriate levels of comfort is a prime driver for the designer of aircraft seats especially in economy cabins.

It is known to provide seats which recline and seats which do not. An example of a seat which does not recline (a fixed seat) is shown in earlier patent application WO2013/144622.

Whether seats recline or not they have to be able to pass the dynamic 16g and 9g tests and the HIC test.

In order to maximise efficiencies, especially on short haul routes, it is often appropriate to turn the aircraft over in as short amount of time as possible. Turning the aircraft over may require re-fuelling the aircraft, re-stocking the aircraft of comestibles or other items of commerce and cleaning the aircraft. It is also necessary for the cabin staff to ensure that each seat is provided with the necessary printed matter, for example one or more of the safety card, airline magazine, menu or other promotional items. Anything that inhibits a cabin crew's ability to clean the aircraft and to ensure that each seat has the requisite equipment will potentially impact on the turnover time of the aircraft.

US-A-6 592 179 describes printed matter (advertising material) being located in a cavity of the backrest. The printed matter is viewable when the movable tray table is in a state of use and is not viewable and inaccessible when the movable tray table is in a state of non-use. It is an object of the invention to provide a seat which is able to satisfy one or more of the above requirements.

A first aspect of the invention provides a seat in accordance with Claim 1.

There is also disclosed a seat having a seat portion and a backrest portion, the seat portion and backrest portion together providing an occupier-accommodating surface, the rear of the backrest portion having a tray table foldable between a first folded position and a second deployed position wherein the tray table may be usable by a passenger facing the rear of the backrest portion, the rear of the backrest portion having formed therein a cavity for receiving printed matter, the uppermost region of the cavity being closed or at least partially covered by an overhang which cooperates with the tray table to close the cavity and prevent removal of printed matter held within the cavity.

Advantageously, the overhang provides a smooth surface. The rear of the backrest portion comprises a backrest surface which extends downwardly from the top of the seat to the overhang. The backrest surface may provide an uninterrupted, smooth surface. The provision of a smooth surface enables the seat to pass the HIC test. In circumstances where the cavity is open at its uppermost portion, in the fashion of a pocket, it may be difficult for the seat to pass the HIC test, especially with a small pitch between successive rows (e.g. 28 inches (71.12 cm)) and/or where the seat is fixed.

The backrest surface and/or the overhang comprises one or more viewing windows. The, or each viewing window may allow an observer to determine if the cavity has retained therein the required printed matter. This is beneficial because an observer can determine whether the cavity has the requisite printed matter without opening the tray table. The printed matter may comprise A4-sized printed material. The window is of insufficient size for the printed matter to be removed from or introduced into the cavity. The window may be occluded by a pane, for example a clear plastic insert which fits (e.g. snap fits into or fits by interference within) the viewing window.

The, one or each viewing window may be defined by peripheral edges or walls, for example an upper and lower vertically displaced peripheral edges or walls and a pair of laterally spaced peripheral edges or walls, for example to form a rectangular viewing window, although other shaped viewing windows maybe provided. The peripheral edges or walls may be curved and/or smooth or smoothed, for example to enable the seat to pass the HIC test. In embodiments the viewing window is rebated with respect to the backrest surface. The upper peripheral wall may extend further from the viewing window than does the lower peripheral wall such that the plane of the backrest surface is stepped inwardly in the region of the viewing window. This may be deployed to avoid presenting an edge in the event of an impact. In other embodiments the upper peripheral wall and lower peripheral wall extend the same distance from the viewing window so that the backrest surface is not stepped in the region of the viewing window.

The tray table may comprise a tray viewing window. If present the tray viewing window may allow an observer to determine if the cavity has retained therein the required printed matter. The tray viewing window may be described or defined at least in part by the tray table. The overhang may comprise a first viewing window portion. The tray table may comprise a second viewing window portion. The first and second window viewing portions may cooperate to form a viewing window. A viewing window may be described or defined in part by the tray table and in part by the backrest surface and/or the overhang, e.g. one or more edges or walls thereof.

The overhang may have a free edge. The tray table may have a distal edge, the free edge and the distal edge may lie adjacent one another with the tray table in the first folded position. One or other of the overhang and the tray table may comprise a latch for reversibly or releasably securing the tray table in the first folded position. The latch may be movable, e.g. rotatable, from a first, e.g. retracted or unlatched, position or orientation to a second, e.g. deployed or latched, position or orientation. The latch may be provided on the overhang.

The latch may be provided on the tray table. The latch may be provided on the backrest portion. The latch may extend through a latch aperture provided in the tray table when the tray table is in the folded position. The latch may be movable or rotatable between the first and second positions or orientations whilst extending through the latch aperture.

In embodiments the latch may be operably connected to a cam mechanism. The cam mechanisms may drive one or more spigots for engagement with respective one or more apertures, thereby to secure the tray table in the folded position. Advantageously, providing the latch within or on the tray table allows the latch to be moved to a lower position which may be beneficial in respect of the HIC test.

The cavity may be formed between a base wall and a pair of side walls, extending from the base wall towards the overhang. The overhang is typically located towards the uppermost portion of the seat, and may be in the region of a or the head rest portion of the seat. The tray table may be pivotably mounted on or to the base wall. The tray table may be pivotably mounted by hinge portions located on or adjacent its proximal edge. The base wall and the side walls may provide facing surfaces which, in the first folded position, the tray table, and in particular peripheral portions of the tray table, lies adjacent.

The base wall may comprise an abutment member extending upwardly therefrom. The abutment member may be located at or about the middle of the base wall. Advantageously the abutment member retains the base of printed matter held within the cavity. The abutment member may extend upwardly by 2 cm or less, for example 1.5 cm or less, and particularly 1 cm or less from the base wall. In embodiments, the rear of the backrest portion comprises one or more cords or lengths of material, which may be resilient, for releasably retaining printed matter held within the cavity.

One or both of the side walls may be provided with a rebate to allow printed matter to be grasped when located within the cavity. The side walls may define a first cavity portion which is marginally larger or wider than the printed material to be accommodated within the cavity and a second cavity portion which is larger or wider than the first cavity portion and/or significantly larger or wider than the printed material to be accommodated within the cavity. In one embodiment, the printed material is A4 size (210 mm wide) and the first cavity portion has a width of ≤ 120% A4 (*i.e.* ≤ 252mm wide), for example a width of ≤ 115% A4 (*i.e.* ≤ 241.5mm wide), say a width of ≤ 110% A4 (*i.e*. ≤ 231mm wide). Where the printed material is A4 size the second cavity portion may have a maximum width of ≤ 160% A4 (*i.e.* ≤ 336mm wide), for example a width of ≤ 150% A4 *(i.e.* ≤ 315mm wide), say a width of ≤ 140% A4 *(i.e.* ≤ 294mm wide). The side walls in the region of the second cavity portion may comprise a rebate formed with walls sloping away from a rebate wall. The rebate may be in the form of a flat topped or frusto pyramid.

The first portion is preferably located above the second portion.

To insert printed matter into the cavity, the tray table is positioned at its deployed second position. Printed matter is then inserted under the overhang and into the cavity. The printed matter may be pushed into the cavity sufficiently to allow the bottom of the printed material to be carried over the abutment, should it be present, and thereby the printed material is located within the cavity. The tray table can then be folded to the first position to trap the printed material within the cavity. With the tray latched in place it is impossible to remove the printed matter without deploying the tray table. Advantageously, the viewing windows allow a member of staff to quickly determine if the required printed matter is located within the cavity.

The lowermost position of the side walls are joined to the base wall by a chamfered or angled wall to generate a rebate. The chamfered or angled wall may comprise a linear shape or may comprise any other suitable shape, for example a slightly curved or curved shape. The tray table preferably has a similarly-shaped terminal portion angled away from its proximal edge.

Advantageously, the rebate affords the occupier of the succeeding seat extra legroom, and specifically extra legroom in the knee area which the occupier would otherwise not have had. The portion of the tray table which is absent due to the sloping walls is typically not a very usable portion of the tray table and so user functionality is not sacrificed.

There is also disclosed a seat having a seat portion and a backrest portion, the seat and backrest together providing an occupier-accommodating surface, the rear of the backrest having a tray table foldable between a first folded position and a second deployed position wherein the tray table is usable by a passenger facing the rear of the backrest, the rear of the backrest having formed therein a storage cavity, the cavity being defined by a base wall and side walls, the base wall being joined to each side wall by a wall sloping upwardly and away from the base wall to provide a rebate.

Advantageously the rebate affords an occupier of a succeeding seat extra leg room and specifically extra leg room in the knee area.

The tray table may be pivotably mounted to the base wall so as to be foldable between the first and second positions. Peripheral portions of the tray table may overlie one or more of the base wall, side walls and sloping walls, and in embodiments all of the base wall, side walls and sloping walls. In embodiments the tray table has a trapezoidal shaped portion, e.g. in plan. The tray table may comprise a rectangular or square shape, e.g. in plan. The tray table may comprise one or more, e.g. two, chamfered corners (for example corners chamfered in plan). In embodiments the tray table may comprise a rectangular or square shape with one or more chamfered corners. The chamfered corners may comprise a linear shape or edge. The chamfered corners may comprise any other suitable shape, for example a slightly curved or curved shape. The tray table may comprise a distal edge, e.g. distal from the cavity when the tray table is in the second deployed position. The tray table may comprise a proximal edge, e.g. proximal the cavity when the tray table is in the second deployed position. The distal edge may be opposed and/or parallel to the proximal edge. The distal edge may extend over a greater length than does the proximal edge.

There is also disclosed a seat having a seat portion and a backrest portion, the seat and backrest together providing an occupier-accommodating surface, the rear of the backrest having a tray table foldable between a first folded position and a second deployed position wherein the tray table is usable by a passenger facing the rear of the backrest, the tray table having a trapezoidal shaped portion, e.g. the tray table having a trapezoidal shaped portion in plan.

The tray table is preferably position so that the shorter parallel side of the trapezoid is located towards the backrest portion. In this way the tray table provides a substantially triangular rebate which can provide extra legroom, especially in the knee region for a person occupying a or the succeeding seat.

There is also disclosed a seat having a seat portion and a backrest portion, the seat and backrest together providing an occupier-accommodating surface, the rear of the backrest having a tray table foldable between a first folded position and a second deployed position wherein the tray table is usable by a passenger facing the rear of the backrest, wherein the tray table includes one or more recesses in a portion thereof that is lowermost when in the first folded position, e.g. to accommodate, in use, a user's knee.

The tray table may comprise a retaining feature, e.g. for retaining, in use, the lower edge of a book or tablet computer.

There is also disclosed a seat having a seat portion and a backrest portion, the seat and backrest together providing an occupier-accommodating surface, the rear of the backrest having a tray table foldable between a first folded position and a second deployed position wherein the tray table is usable by a passenger facing the rear of the backrest, the tray table having a retaining feature for retaining, in use, the lower edge of a book or tablet computer.

The retaining feature may comprise a recess or gripping feature or material. Additionally or alternatively, the retaining feature may comprise a lip, ridge, a bracing or buttress member. The retaining feature may be on or may project or protrude from a work surface of the tray table. The work surface may comprise a major surface of the tray table that is uppermost when in the second deployed position.

The seat may comprise an electrical contact point, for example a 2 pin or 3 pin plug socket for providing electrical power to an ancillary device and/or a USB port (for example a USB A, USB B or USB C port), a Lightning (RTM) port and HDMI port or other port for providing electrical power and/or data connectivity to an ancillary device such as a mobile phone, tablet, PDA or personal computer. Preferably the electrical contact point and/or data connectivity point may be provided in the backrest portion, for example adjacent the tray table. In embodiments the electrical contact point and/or data connectivity point may be provided in the cavity. In embodiments the electrical contact point and/or data connectivity point may be provided outwith the cavity.

There is also disclosed a seat assembly comprising two or more seats as described above, for example arranged in a row.

In embodiments, the rear of the backrest portion may have a cavity formed therein for receiving printed matter. The cavity may be in an upper portion of the backrest portion, for example above the tray table when it is in the first folded position.

There is also disclosed a seat having a seat portion and a backrest portion, the seat portion and backrest portion together providing an occupier-accommodating surface, the rear of the backrest portion having a tray table foldable between a first folded position and a second deployed position wherein the tray table may be usable by a passenger facing the rear of the backrest portion, the rear of the backrest portion having formed therein a cavity for receiving printed matter, wherein the cavity is formed in an upper portion of the back rest which is above the tray table when the tray table is in the first folded position.

The cavity may comprise an upper opening for inserting and removing printed material therein. The backrest may comprise one or more viewing windows below the upper opening.

It will be appreciated that any of the features specified in relation to one aspect may be used in relation to the or any of the other aspects of the invention.

In order that the invention may be more fully understood, it will now be described, by way of example only and with reference to the following drawings, in which:
Figure 1 is a side view of an aircraft seat
Figures 2 and 3 are front perspective views of the aircraft seat of Figure 1 in a three seat arrangement;
Figure 4 is a rear perspective view of the aircraft seat of Figure 1 in a three seat arrangement;
Figure 5 is a rear view of the aircraft seat of Figure 1 in a three seat arrangement;
Figure 6 is a rear view of an aircraft seat according to an embodiment of the invention;
Figure 7 is a rear view of an aircraft seat according to another embodiment of the invention;
Figure 8 is a rear view of an aircraft seat according to another embodiment of the invention;
Figure 9 is a rear view of an aircraft seat according to another embodiment of the invention;
Figure 10 is a rear view of an aircraft seat according to another embodiment of the invention;
Figure 11 is a rear view of an aircraft seat;
Figure 12 is a rear view of an aircraft seat; and
Figure 13 is a partial perspective view of an aircraft seat.

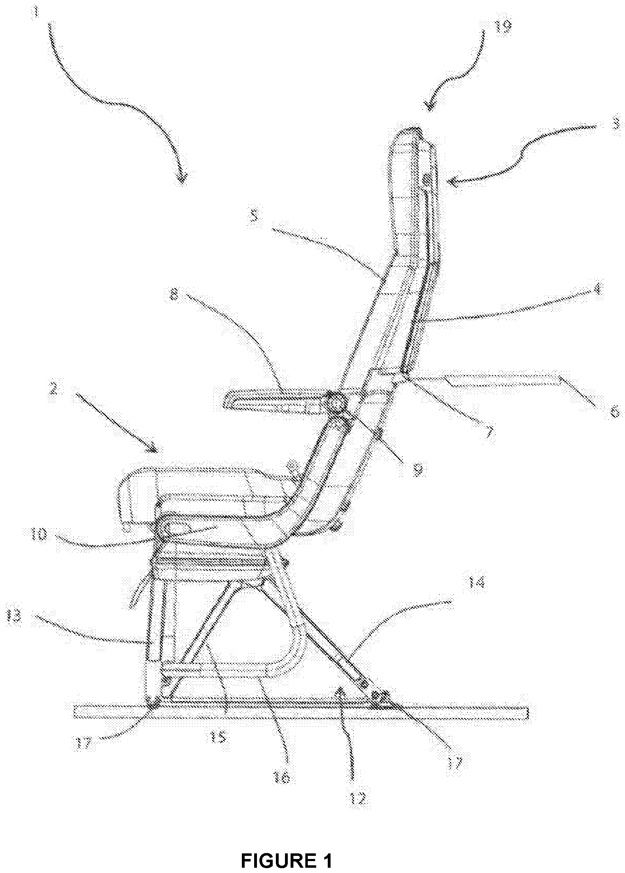

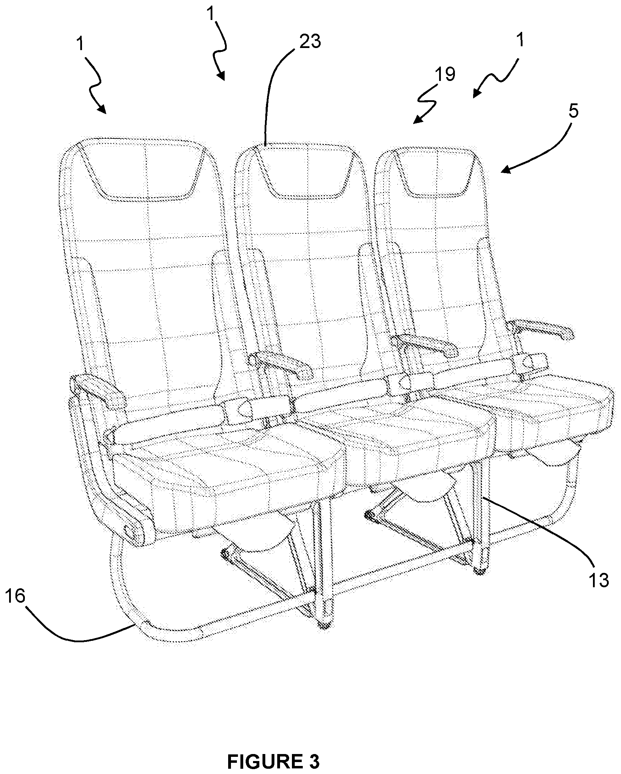

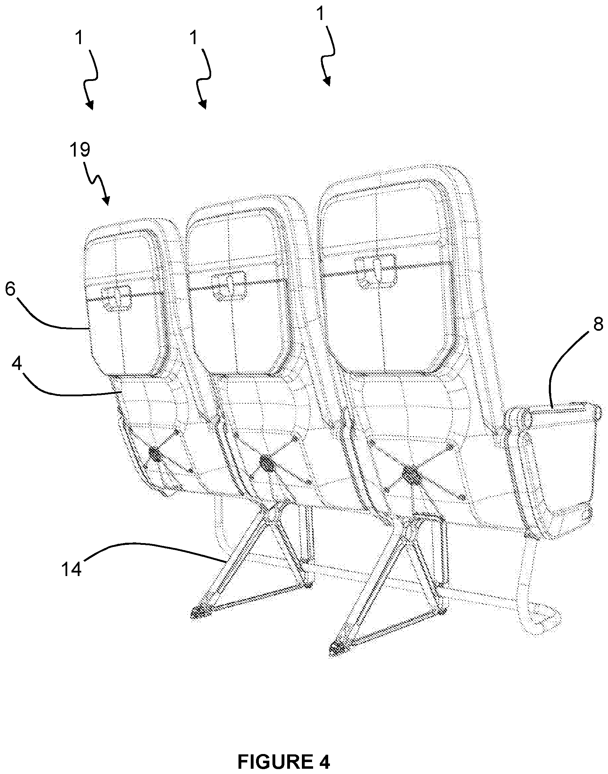

Referring first to Figures 1 to 4 there is shown a row of aircraft seats 1 comprising a seat portion or cushion 2 (hereinafter seat cushion 2), a back portion or seat back 3 (hereinafter seat back 3) and a leg assembly 12. The seat cushion 2 and seat back 3 are coupled together via a side support plate 10. The side support plate 10 has a curved shape that generally follows the plane of the seat cushion 2 and extends partway up the seat back 3.

The aircraft seat 1 in this embodiment is a fixed seat, *i.e.* the seat back 3 may not be capable of being reclined relative to the seat cushion 2. It will be appreciated by one skilled in the art that the invention may be applied to reclinable seats also.

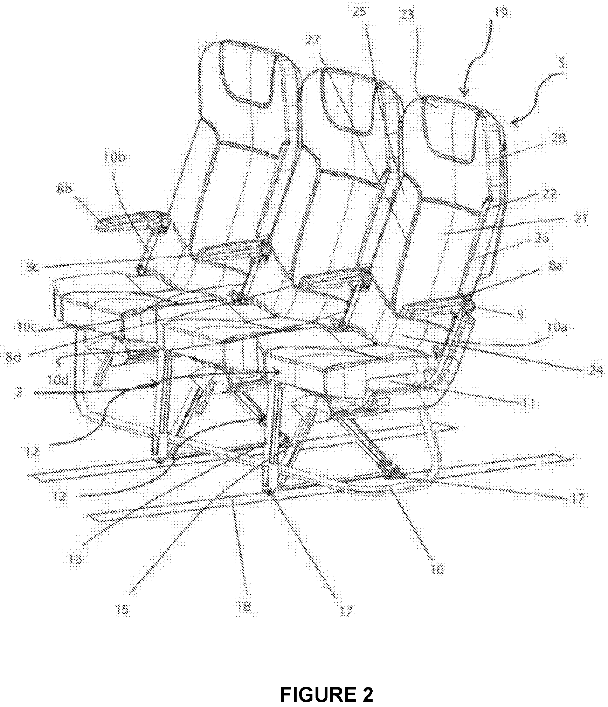

The aircraft seat 1 can be fitted to an aircraft via the leg assembly 12. The leg assembly 12 comprises engagement means 17 for coupling the aircraft seat 1 to the aircraft via a rail 18 which is fixed to the aircraft (see Figure 2).

The aircraft seat 1 also comprises a luggage bar 16 supported by the leg assembly 12 and coupled to the side support plate 10.

The side support plate 10 also supports and retains the seat back 3. The side support plate 10 is fixed to the seat back 3 via fixing means (not shown), thereby fixing the seat back 3 in position relative to the seat cushion 2.

The leg assembly 12, as shown in Figure 1, comprises a front leg 13 and a rear leg 14, connected by an angled leg strut 15. The leg assembly 12 is coupled to the aircraft seat 1 via engagement with struts (not shown).

Referring now to the seat back 3, as shown in Figure 1, the seat back 3 comprises a rigid back support 4 and a back cushion 5 coupled to the back support 4. A tray table 6 is connected to the back support 4 at a hinge 7. An armrest 8 is hingedly connected to the side support plate 10 adjacent the back support 4 at a pivot point 9.

The back cushion 5 is secured to the assembled back support 4. Referring back to Figure 2, the back cushion 5 comprises a substantially rectangular centre portion 21 comprising a first side 26 and a second side 27. A first wing 22 projects forward and outward from the first side 26 of the centre portion 21 , extending towards a first side of the seat back 3. Similarly, a second wing 25 is provided to mirror the first wing 22, and projects forward and outward from the second side 27 of the centre portion 21 towards a second side of the seat back 3.

The upper portion of the back cushion 5 is angled, corresponding to the upper portion of the back support 4, thereby forming a headrest cushion 23.

The back cushion 5 further comprises a side wall 28 extending from the outermost edge of the first wing 22, headrest cushion 23, and second wing 25 to meet the back support 4 when the seat back is assembled.

As shown in Figure 2, the back cushion 5 may not extend to meet the seat cushion 2, but instead extend part-way down the length of the seat back 3 thereby forming a gap 24 in the lower region of the seat.

When in the unlocked position, as shown in Figure 1, the tray table 6 is located a distance of approximately 626mm above the aircraft floor, and can be extended from the seat back 3. The tray table 6 can extend from the head rest portion 19 of the seat back 3 by a maximum distance of approximately 233mm.

As shown in Figure 2, the aircraft seat 1 may be provided in a three seat arrangement, thereby forming a row of seats in an aircraft. In a three seat arrangement, the aircraft seats are provided with two leg assemblies 12, a first leg assembly 12a and a second leg assembly 12b, positioned between adjacent seats 1, to secure the aircraft seats 1 to the floor of the aircraft. A single luggage bar 16 is provided for the three seat arrangement, supported by the two leg assemblies 12.

Four side support plates 10 are provided. A first plate 10a is positioned at a first side of the seat arrangement and a second plate 10b is positioned at a second side of the seat arrangement. A third and fourth side support plate 10c, 10d are positioned between adjacent aircraft seats 1, such that they are supported by the first and second leg assemblies 12a, 12b.

Similarly four armrests 8 are provided. A first armrest 8a positioned at a first side of the seat arrangement supported by the first plate 10a, and a second armrest 8b positioned at a second side of the seat arrangement supported by the second plate 10b. A third and fourth armrest 8c, 8d are positioned between adjacent aircraft seats I and are supported by the third and fourth side support plates 10c, 10d respectively.

In alternative arrangements, a row of seats on an aircraft may comprise a single, or a pair of aircraft seats 1. In other arrangements, the row of seats may comprise more than three aircraft seats 1, for instance 4, 5, or 6 aircraft seats.

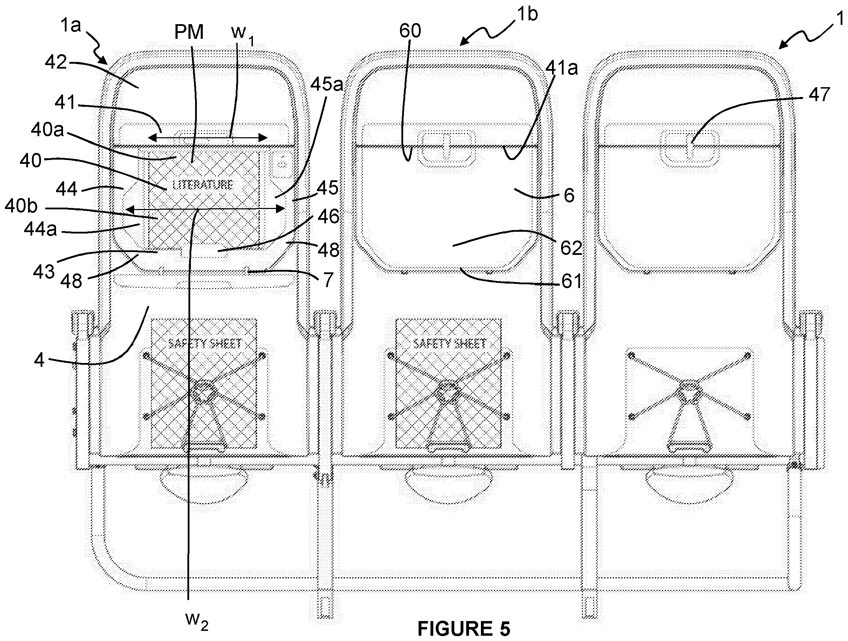

Referring now to Figure 5, the rear of the seat 1 is shown in greater detail. The back support 4 comprises a rear including the tray table 6, a cavity 40 formed into the rear of the back support 4 and an overhang 41.

The tray table 6 is foldable between a first folded position (as shown by seat 1b) and a second deployed position (as shown by seat 1a). The tray table 6 may be usable by a passenger facing the rear of the back support 4, for example seated behind the seat 1. The tray table 6 has a distal edge 60, e.g. distal from the hinge 7.

The cavity 40 formed in the rear of the back support 4 is suitable for receiving printed matter PM, e.g. one or more magazines or pamphlets.

The overhang 41 may be located towards the uppermost portion of the seat 1, e.g. in or toward the region of the head rest portion 19 of the seat 1. The overhang 41 closes the uppermost region of the cavity 40. The overhang 41 cooperates with the tray table 6 to close the cavity 40 and prevent removal of printed matter PM held within the cavity 40. The overhang 41 has a smooth surface, *e.g*. a smooth exterior surface. The overhang 41 has a free edge or lip 41a. The free edge or lip 41a lies adjacent to the distal edge 60 of the tray table 6 in the first folded position.

The rear of the back support 4 comprises a backrest surface 42 extending downwardly from the top of the seat 1 to the overhang 41. The backrest surface 42 is uninterrupted and smooth. The backrest surface 42 is free from sharp edges and projections.

The cavity 40 is formed between a base wall 43 and a pair of side walls 44, 45 which extend from the base wall 43 toward the overhang 41. The tray table 6 is pivotably mounted on or to the base wall 43, e.g. by the hinge 7, at a proximal edge 61 of the tray table 6. The base wall 43 and the side walls 44, 45 provide facing surfaces which lie adjacent to the peripheral portions of the tray table 6 when it is in the first folded position and define the cavity.

The base wall 43 comprises an abutment member 46, which extends upwardly therefrom. The abutment member 46 is located approximately in the middle of the base wall 43. The abutment member 46 is configured to retain the base of printed matter PM held within the cavity 40. In this embodiment the abutment member 46 extends upwardly by 1cm from the base wall 43.

The side walls 44, 45 are each provided with a rebate 44a, 45a for allowing access to printed matter PM located within the cavity. In this embodiment the rebates 44a, 45a have a frusto pyramidal shape and are formed by opposed surfaces of the side walls 44, 45. More specifically, the side walls 44, 45 define a first cavity portion 40a having a width w₁ and a second cavity portion 40b below the first cavity portion 40a and having a maximum width w₂ greater than that of the first cavity portion 40a. In this embodiment, the width w₁ of the first cavity portion 40a is slightly greater than the width of A4 printed matter PM, specifically 252mm, and the second cavity portion 40b has a maximum width w₂ of 336mm.

A latch 47 is provided on the overhang 41 for reversibly securing the tray table 6 in the first folded position. The latch 47 is rotatably attached to the overhang 41 and may be rotated, in use, between secured and unsecured positions.

In use, the tray table 6 is moved into the second deployed position and printed matter PM is inserted into the cavity 40. An upper edge of the printed matter PM is installed behind the overhang 41 and up into the cavity 40 and a lower edge thereof is passed over the abutment member 46 such that the entire printed matter PM is installed into the cavity 40. When released, the printed matter PM lowers such that its lower edge rests behind the abutment member 46. The abutment member 46 and the overhang 41 act to prevent inadvertent removal of the printed matter PM from the cavity 40. The tray table 6 can then be folded into the first position to trap the printed matter PM within the cavity 40.

Removal of the printed matter PM from the cavity 40 involves carrying out the above-described steps in reverse, the second cavity portion or portions 40b facilitating hand manipulation or grasping of the printed material.

The lowermost portion of the side walls 44, 45 are each joined to the base wall 43 by a chamfered or angled wall 48. The tray table 6 has a similarly shaped proximal portion 62 angled away from its proximate edge 61. Thus, the proximal portion 62 of the tray table 6 and the angled walls 48 together define a triangular rebate that provides extra leg room in the knee region.

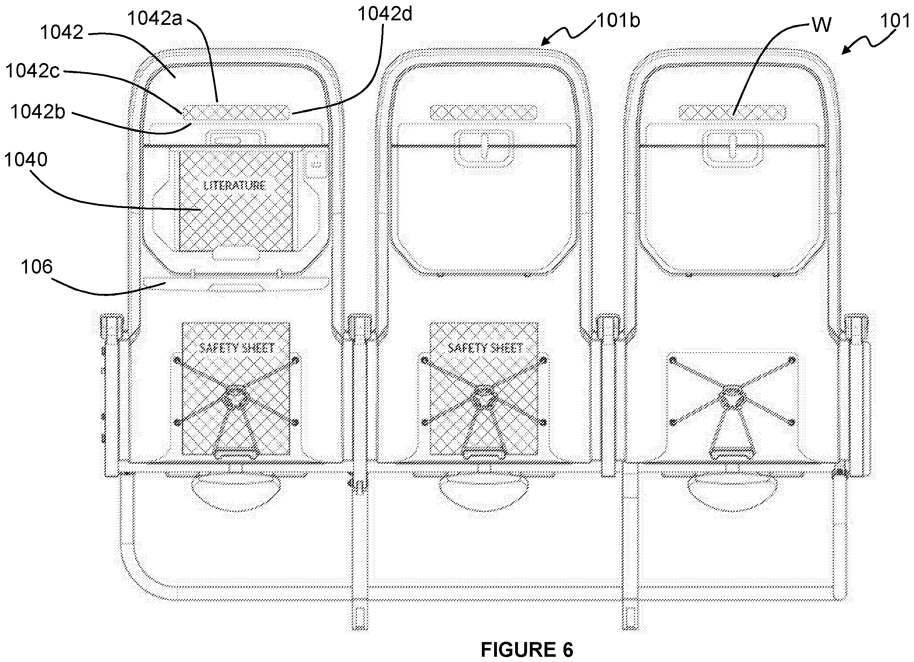

Referring now to Figure 6, there is shown a seat 101 according to an embodiment of the invention in which features that are similar to those shown in Figure 5 are identified by a preceding '10'. The seat 101 shown in Figure 6 differs from that shown in Figure 5 in that the backrest surface 1042 includes a viewing window W.

The viewing window W may comprise an aperture through the backrest surface 1042. In this embodiment the viewing window W is an open aperture although in alternative embodiments it will be appreciated that the viewing window W may be covered by and/or filled by a window pane, for example formed from a transparent or semi-transparent material. The viewing window W extends partially across the width of the backrest surface 1042 in this embodiment. The viewing window W has a width that is less than that of the cavity 1040 and less than the width of the printed material PM located therein.

The viewing window W is defined by upper and lower vertically displaced peripheral walls 1042a, 1042b and by a pair of laterally spaced peripheral side walls 1042c, 1042d. In this embodiment the viewing window W is in the form of a rectangle, however in embodiments it will be appreciated that the viewing window W may have any suitable shape. The viewing window W is rebated with respect to the backrest surface 1042. The upper and lower peripheral walls 1042a, 1042b are in the plane of the backrest surface 1042 in this embodiment. However, in embodiments, the upper peripheral wall 1042a may extend further from the viewing window W than does the lower peripheral wall 1042b such that the backrest surface 1042 is recessed or stepped relative to the region of the viewing window W.

In embodiments the viewing window W may be located distal from the top of the seat 101. In use, flight crew or other personnel may rapidly and efficiently ascertain the contents of the cavity 1040 through the viewing window W even when the tray table 106 is in the first folded position (as shown by seat 101b). Beneficially, the seat 101 may therefore be more rapidly and efficiently restocked with relevant printed matter PM (if necessary) and/or detritus (such as food wrappers) may be removed, if present, from the cavity 1040.

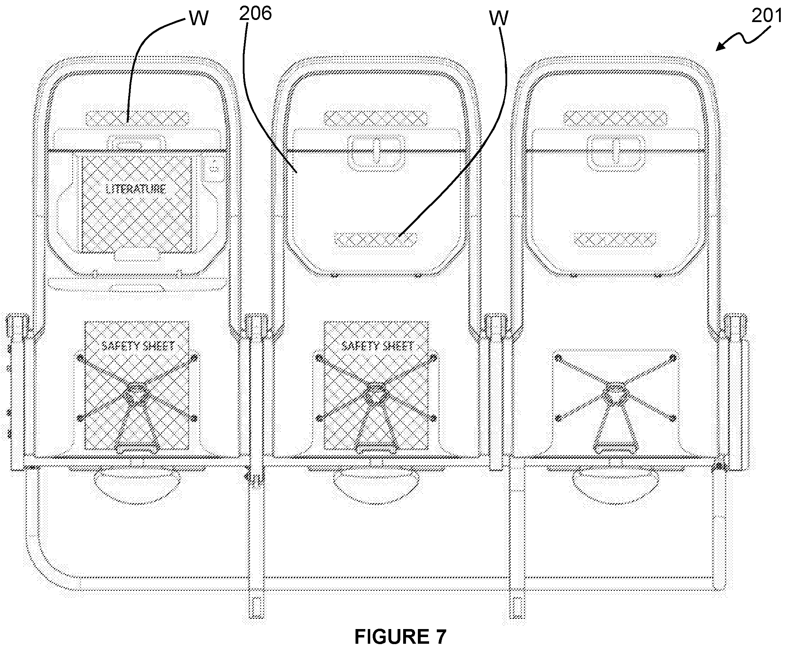

Referring now to Figure 7, there is shown a seat 201 according to an alternative embodiment of the invention in which features that are similar to those shown in Figure 5 are identified by a preceding '20'. The seat 101 shown in Figure 7 differs from the seat 101 shown in Figure 6 in that the tray table 206 also comprises a viewing window W.

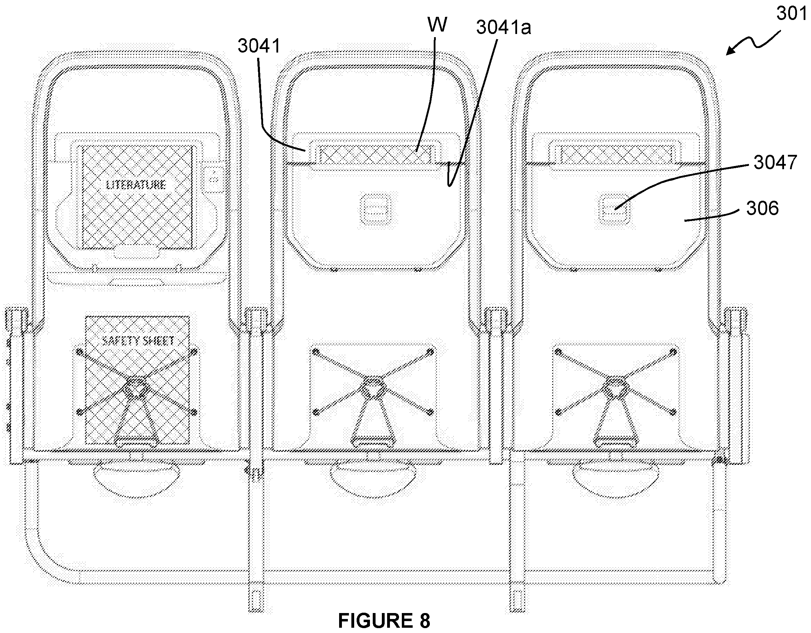

Referring now to Figure 8, there is shown a seat 301 according to an alternative embodiment of the invention in which features that are similar to those shown in Figure 5 are identified by a preceding '30'. The seat 301 shown in Figure 8 differs from the seat 1 shown in Figure 5 in that the viewing window W is provided in the overhang 3041 and extends to the free edge or lip 3041a thereof.

The seat 301 shown in Figure 8 also differs from the seat 1 shown in Figure 5 in that the latch 3047 is provided on the tray table 306. The latch 3047 is operably connected to a cam mechanism (not shown). The cam mechanism is operable to drive one or more spigots (not shown) for engagement with respective one or more apertures (not shown) to thereby secure the tray table 306 in the first folded position or to release the tray table therefrom.

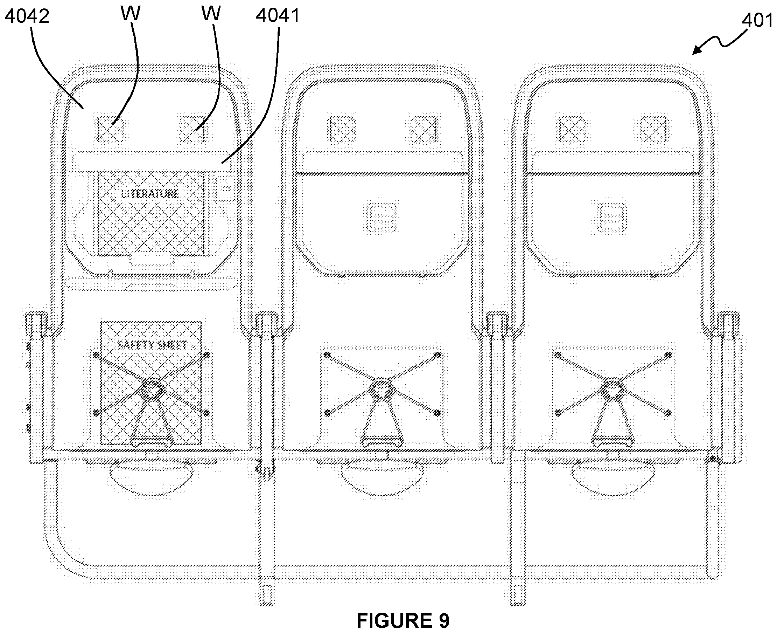

Referring now to Figure 9, there is shown a seat 401 according to an alternative embodiment of the invention in which features that are similar to those shown in Figure 5 are identified by a preceding '40'. The seat 401 shown in Figure 9 differs from the seat 301 shown in Figure 8 in that the backrest surface 4042 comprises two viewing windows W and the overhang 4041 is free from a viewing window W.

The viewing windows W are shown as being generally square and equally spaced from the sides and top of the seat 1.

In embodiments the backrest surface 4042 may comprise more than two viewing windows W, for example three, four or more viewing windows W. Additionally or alternatively, in embodiments the viewing windows W need not all be of the same size and geometry as one another, and instead one, some or each viewing window W (where more than two are present) may be of a different size and/or geometry to another viewing window W.

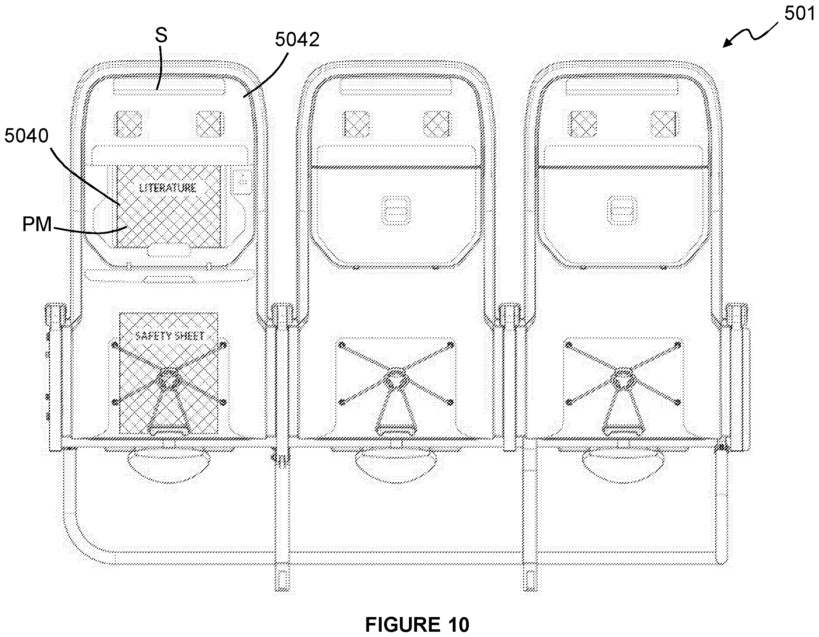

Referring now to Figure 10, there is shown a seat 501 according to an alternative embodiment of the invention in which features that are similar to those shown in Figure 5 are identified by a preceding '50'. The seat 501 shown in Figure 10 differs from the seat 401 shown in Figure 9 in that a slot S is included in the backrest surface 5042.

The slot S comprises an aperture through an uppermost portion of the backrest surface 5042. The slot S is in communication with the cavity 5040 and forms a pocket therewith. In use, printed matter PM may be inserted into the cavity 5040 through the slot S. Removal of the printed matter PM may be through the cavity 5040 (as described above) and not via the slot S. Alternatively, in embodiments removal of printed matter PM from the cavity 5040 may be accomplished via the slot S.

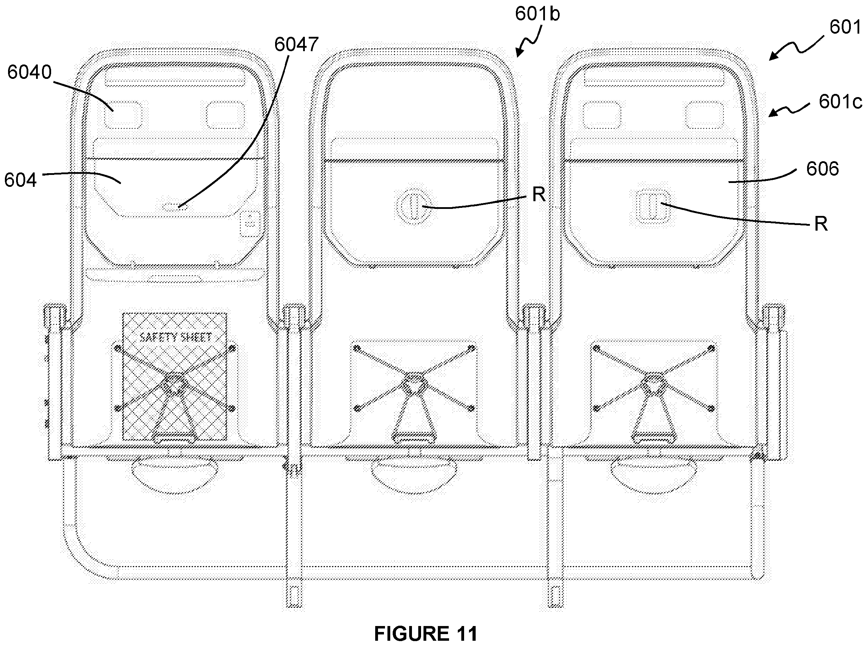

Referring now to Figure 11, there is shown a seat 601 in which features that are similar to those shown in Figure 5 are identified by a preceding '60'. The seat 601 shown in Figure 11 differs from the seat 501 shown in Figure 10 in that the cavity 6040 is provided only in an upper portion of the seat back, above the tray table 606 when it is in the first folded position, behind the backrest surface 6042. A ledge (not shown) is included above the tray table 606 providing a shelf on which printed matter PM within the cavity 6040 may rest.

The backrest portion 604 is provided with a latch 6047 which is located on the backrest portion 4 in a region covered by the tray table 606 when it in the first folded position. The latch 6047 is rotatably mounted to the backrest portion 604.

The tray table 606 includes an aperture (not shown) through its thickness, the aperture positioned and configured to cooperate, in use, with the latch 6047 when the tray table 606 is moved into the first folded position. When the latch 6047 protrudes through the aperture it may be rotated into a locked condition, thereby retaining the tray table 606 in the first folded position. A suitably sized rebate R may surround the aperture, where the rebate R may have any suitable shape, for example circular as shown in seat 601b or square as shown in seat 601c.

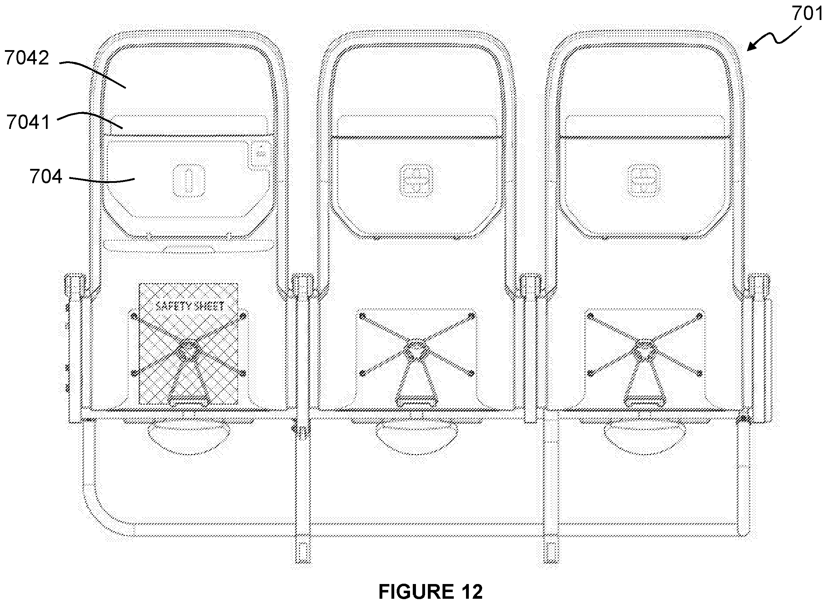

Referring now to Figure 12, there is shown a seat 701 in which features that are similar to those shown in Figure 5 are identified by a preceding '70'. The seat 701 shown in Figure 12 differs from the seat 601 shown in Figure 11 in that the rear of the backrest portion 704 does not include a cavity and the overhang 7041 and backrest surface 7042 are smooth and uninterrupted.

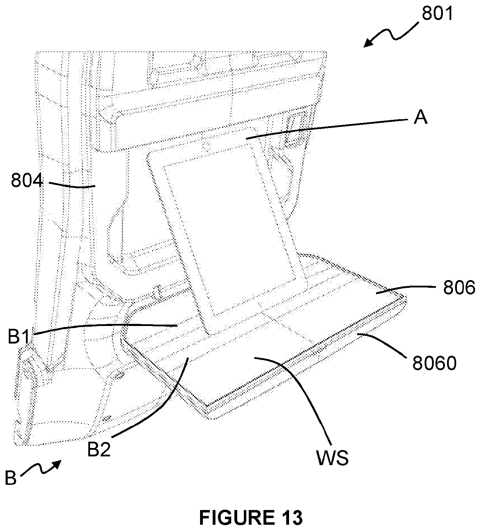

Referring now to Figure 13, there is shown a partial perspective view of a seat 801 in which features that are similar to those shown in Figure 5 are identified by a preceding '80'. The seat 801 shown in Figure 13 shows the tray table 806 in the second deployed position. The tray table 806 has a work surface WS for use by a passenger, e.g. to place items thereupon. The work surface WS is substantially flat and includes a bracing member B for aiding in supporting an item there against. The bracing member B comprises first and second bracing portions B1, B2. The first and second bracing portions B1, B2 are in the form of projections from the work surface WS. In this embodiment the first and second bracing portions B1, B2 are in strip form though it will be appreciated that this need not be the case and in embodiments they may be of any suitable shape. The first and second bracing portions B1, B2 extend across the width of the work surface WS, for example substantially parallel to the distal edge 8060 of the tray table 806.

In use, an article A (for example an electronic tablet or book) may be positioned such that its lower edge rests against the leading edge of one of the bracing portions B1, B2. The upper edge of the article A may then be rested against the rear of the back support 804 and the article A restrained from movement by the bracing member B.

In the seat 801, and indeed in any of the seats mentioned hereinabove, there may be provided an electrical contact point, for example a 2 pin or 3 pin plug socket for providing electrical power to an ancillary device and/or a USB port (for example a USB A, USB B or USB C port), a Lightning (RTM) port and HDMI port or other port for providing electrical power and/or data connectivity to an ancillary device such as a mobile phone, tablet, PDA or personal computer.

Additionally or alternatively, the bracing member described in respect of Figure 13 may be included with the tray table of any other embodiment of the invention.

It will be appreciated by those skilled in the art that several variations to the aforementioned embodiments are envisaged without departing from the scope of the invention. For example, although each of the above-described embodiments comprise a chamfered or angled wall joining the base wall to the side walls this need not be the case and some embodiments may be absent this feature. Where the chamfered or angled walls are absent the tray table may also be absent a similarly-shaped terminal portion angled away from its terminal edge. Additionally or alternatively, although the above embodiments the seat back 3 comprises a back support this need not be the case and instead the seat back 3 may comprise a single or unitary member.

Although the abutment member shown in Figure 13 is described as comprising two bracing portions this need not be the case and instead the bracing member may comprise only one bracing portion or, alternatively, may comprise more than two bracing portions. Additionally or alternatively, in embodiments the bracing member may comprise one or more rebates, for example into which the lower edge of an article may be at least partially located. Additionally or alternatively, in embodiments the bracing member may comprise one or more regions having a high coefficient of friction. For example, a portion of the work surface may be formed from or partially covered with a material having a higher coefficient of friction than the remainder of the work surface.

## Claims

1. A seat (1) having a seat portion (2) and a backrest portion (4), the seat portion (2) and backrest portion (4) together providing an occupier-accommodating surface, the rear of the backrest portion 4) having a tray table (6) foldable between a first folded position and a second deployed position wherein the tray table (6) is usable by a passenger facing the rear of the backrest portion (4), the rear of the backrest portion (4) having formed therein a cavity (40) for receiving printed matter (PM), the uppermost region of the cavity (40) being closed or at least partially covered by an overhang (41) which cooperates with the tray table (6) to close the cavity (40) and prevent removal of printed matter (PM) held within the cavity (40), where the rear of the backrest portion (4) comprises a backrest surface (42) which extends downwardly from the top of the seat (1) to the overhang (41), **characterised in that** the backrest surface (42) and/or the overhang (41) comprises one or more viewing windows (W) arranged to allow determination as to whether the cavity (40) retains printed matter (PM).

2. A seat (1) according to claim 1 where the tray table (6) comprises a tray viewing window (W) arranged to allow determination as to whether the cavity (40) retains printed matter (PM).

3. A seat (1) according to any preceding claim where the overhang (41) has a free edge (41a) and the tray table (6) has a distal edge (60), the free edge (41a) and the distal edge (60) lying adjacent one another with the tray table (6) in the first folded position.

4. A seat (1) according to any preceding claim where the cavity (40) is formed between a base wall (43) and a pair of side walls (44, 45), extending from the base wall (43) towards the overhang (41).

5. A seat (1) according to claim 4 where the tray table (6) is pivotably mounted on or to the base wall (43).

6. A seat (1) according to claim 4 or claim 5 where the base wall (43) and the side walls (44, 45) provide facing surfaces which, in the first folded position, the tray table (6) lies adjacent.

7. A seat (1) according to any of claims 4 to 6 where the base wall (43) comprises an abutment member (46) extending upwardly therefrom and arranged to retain the base of printed matter (PM) held within the cavity (40).

8. A seat (1) according to any of claims 4 to 7 where the lowermost position of the side walls (44, 45) are joined to the base wall (43) by a chamfered or angled wall (48) to generate a rebate.

9. A seat (1) according to claim 8 where peripheral portions of the tray table (6) overlie one or more of the base wall (43), side walls (44, 45) and sloping walls.

10. A seat (1) according to any preceding claim where the cavity (40) is in an upper portion of the backrest portion (4) above the tray table (6) when it is in the first folded position.

## Patentansprüche

1. Sitz (1), der einen Sitzabschnitt (2) und einen Rückenlehnenabschnitt (4) aufweist, wobei der Sitzabschnitt (2) und der Rückenlehnenabschnitt (4) zusammen eine Insassenbelegungsfläche bereitstellen, wobei die Rückseite des Rückenlehnenabschnittes 4) einen Tabletttisch (6) aufweist, der zwischen einer ersten gefalteten Position und einer zweiten eingesetzten Position faltbar ist, wobei der Tabletttisch (6) durch einen Insassen nutzbar ist, welcher der Rückseite des Rückenlehnenabschnittes (4) zugewandt ist, wobei in der Rückseite des Rückenlehnenabschnittes (4) ein Hohlraum (40) zum Aufnehmen von Drucksachen (PM) gebildet ist, wobei der oberste Bereich des Hohlraums (40) durch einen Überhang (41) geschlossen oder zumindest teilweise bedeckt ist, der mit dem Tabletttisch (6) kooperiert, um den Hohlraum (40) zu schließen und Entfernung von Drucksachen (PM) zu verhindern, die innerhalb des Hohlraums (40) gehalten werden, wobei die Rückseite des Rückenlehnenabschnittes (4) eine Rückenlehnenfläche (42) umfasst, die sich von der Oberseite des Sitzes (1) zu dem Überhang (41) nach unten erstreckt, **dadurch gekennzeichnet, dass** die Rückenlehnenfläche (42) und/oder der Überhang (41) ein oder mehrere Sichtfenster (W) umfassen, die angeordnet sind, um Bestimmung zuzulassen, ob der Hohlraum (40) Drucksachen (PM) zurückhält.

2. Sitz (1) nach Anspruch 1, wobei der Tabletttisch (6) ein Tablettsichtfenster (W) umfasst, das angeordnet ist, um Bestimmung zuzulassen, ob der Hohlraum (40) Drucksachen (PM) zurückhält.

3. Sitz (1) nach einem vorhergehenden Anspruch, wobei der Überhang (41) eine freie Kante (41a) aufweist und der Tabletttisch (6) eine distale Kante (60) aufweist, wobei die freie Kante (41a) und die distale Kante (60) benachbart zueinander liegen, wobei der Tabletttisch (6) in der ersten gefalteten Position ist.

4. Sitz (1) nach einem vorhergehenden Anspruch, wobei der Hohlraum (40) zwischen einer Basiswand (43) und einem Paar Seitenwände (44, 45) gebildet ist, die sich von der Basiswand (43) in Richtung des Überhangs (41) erstrecken.

5. Sitz (1) nach Anspruch 4, wobei der Tabletttisch (6) schwenkbar an oder zu der Basiswand (43) montiert ist.

6. Sitz (1) nach Anspruch 4 oder Anspruch 5, wobei die Basiswand (43) und die Seitenwände (44, 45) einander zugewandte Flächen bereitstellen, zu denen der Tabletttisch (6) in der ersten gefalteten Position benachbart liegt.

7. Sitz (1) nach einem der Ansprüche 4 bis 6, wobei die Basiswand (43) ein Anschlagselement (46) umfasst, das sich davon nach oben erstreckt und angeordnet ist, um die Basis von Drucksachen (PM), die innerhalb des Hohlraums (40) gehalten werden, zurückzuhalten.

8. Sitz (1) nach einem der Ansprüche 4 bis 7, wobei die unterste Position der Seitenwände (44, 45) durch eine abgeschrägte oder gewinkelte Wand (48) mit der Basiswand (43) verbunden sind, um eine Ausnehmung zu erzeugen.

9. Sitz (1) nach Anspruch 8, wobei periphere Abschnitte des Tabletttisches (6) über einer oder mehreren von der Basiswand (43), den Seitenwänden (44, 45) und geneigten Wänden liegen.

10. Sitz (1) nach einem vorhergehenden Anspruch, wobei der Hohlraum (40) in einem oberen Abschnitt des Rückenlehnenabschnittes (4) über dem Tabletttisch (6) ist, wenn er in der ersten gefalteten Position ist.

## Revendications

1. Siège (1) possédant une partie siège (2) et une partie dossier (4), la partie siège (2) et la partie dossier (4) formant ensemble une surface de réception d'occupant, l'arrière de la partie dossier (4) possédant une tablette de siège (6) pliable entre une première position pliée et une seconde position déployée, ladite tablette de siège (6) pouvant être utilisée par un passager faisant face à l'arrière de la partie dossier (4), l'arrière de la partie dossier (4) possédant une cavité (40) formée dans celui-ci destinée à recevoir un imprimé (PM), la zone la plus haute de la cavité (40) étant fermée ou au moins partiellement recouverte par une avancée (41) qui coopère avec la tablette de siège (6) pour fermer la cavité (40) et empêcher le retrait de l'imprimé (PM) maintenu à l'intérieur de la cavité (40), où l'arrière de la partie dossier (4) comprenant une surface de dossier (42) qui s'étend vers le bas à partir du haut du siège (1) jusqu'à l'avancée (41), **caractérisé en ce que** la surface de dossier
(42) et/ou l'avancée (41) comprennent une ou plusieurs fenêtres de visualisation (W) agencées pour permettre de déterminer si la cavité (40) retient l'imprimé (PM).

2. Siège (1) selon la revendication 1, où la tablette de siège (6) comprend une fenêtre de visualisation de plateau (W) agencée pour permettre de déterminer si la cavité (40) retient l'imprimé (PM).

3. Siège (1) selon une quelconque revendication précédente, où l'avancée (41) possède un bord libre (41a) et la tablette de siège (6) possède un bord distal (60), le bord libre (41a) et le bord distal (60) étant adjacent l'un à l'autre avec la tablette de siège (6) dans la première position pliée.

4. Siège (1) selon une quelconque revendication précédente, où la cavité (40) est formée entre une paroi de base (43) et une paire de parois latérales (44, 45), s'étendant à partir de la paroi de base (43) vers l'avancée (41).

5. Siège (1) selon la revendication 4, où la tablette de siège (6) est montée de manière pivotante sur ou à la paroi de base (43).

6. Siège (1) selon la revendication 4 ou la revendication 5, où la paroi de base (43) et les parois latérales (44, 45) fournissent des surfaces en regard auxquelles, dans la première position pliée, la tablette de siège (6) est adjacente.

7. Siège (1) selon l'une quelconque des revendications 4 à 6, où la paroi de base (43) comprend un élément de butée (46) s'étendant vers le haut à partir de celle-ci et agencé pour retenir la base d'imprimé (PM) maintenu à l'intérieur de la cavité (40).

8. Siège (1) selon l'une quelconque des revendications 4 à 7, où la position la plus basse des parois latérales (44, 45) est jointe à la paroi de base (43) par une paroi chanfreinée ou coudée (48) pour générer une feuillure.

9. Siège (1) selon la revendication 8, où des parties périphériques de la tablette de siège (6) recouvrent l'une ou plusieurs de la paroi de base (43), des parois latérales (44, 45) et des parois inclinées.

10. Siège (1) selon une quelconque revendication précédente, où la cavité (40) étant dans une partie supérieure de la partie dossier (4) au-dessus de la tablette de siège (6) lorsqu'elle est dans la première position pliée.
